(19) **Europäisches Patentamt / European Patent Office / Office européen des brevets**

(11) **EP 2 256 481 B1**

(12) **EUROPEAN PATENT SPECIFICATION**

(45) Date of publication and mention
of the grant of the patent:
**08.02.2017 Bulletin 2017/06**

(51) Int Cl.:
***G01N 21/27*** *(2006.01)*   ***G01N 21/35*** *(2014.01)*

(21) Application number: **09180712.3**

(22) Date of filing: **23.12.2009**

(54) **Baseline setting method**

Grundlinieneinstellungsverfahren

Procédé de configuration de base

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **28.05.2009 JP 2009129494**

(43) Date of publication of application:
**01.12.2010 Bulletin 2010/48**

(73) Proprietor: **Jasco Corporation
Hachioji-shi
Tokyo 192-8537 (JP)**

(72) Inventors:
• **Soejima, Takeo**
**Tokyo 192-8537 (JP)**
• **Ohkubo, Yusei**
**Toyko 192-8537 (JP)**

(74) Representative: **Henkel, Breuer & Partner
Patentanwälte
Maximiliansplatz 21
80333 München (DE)**

(56) References cited:
**JP-A- 5 060 614    US-A1- 2006 212 275**

**Description**

BACKGROUND OF THE INVENTION

FIELD OF THE INVENTION

The present invention relates to baseline setting methods, and more specifically, to an improvement of a baseline estimation method.

DESCRIPTION OF THE RELATED ART

In spectrum measurement by an infrared spectrophotometer or the like, the wavelength or wavenumber is indicated on the reference axis (X-axis), and the absorbance, reflectance, or the like is indicated on the Y-axis, in usual cases. Then, measured values are plotted with respect to points on the reference axis.

While the absorbance, reflectance, or the like is plotted when the wavelength is changed, a narrow mountain, known as a peak, appears in the spectrum. This occurs because the atom or molecule has the property of emitting or absorbing light at a specific wavelength.

However, the baseline of the spectrum depends on the characteristics of the instrument used to take the spectrum or the environment in which the spectrum measurement is being carried out. Sometimes, the occurrence of fluorescence and the like may also influence the baseline.

Therefore, the baseline setting for the spectrum and spectrum data correction based on the set baseline are essential techniques in spectrum data processing.

In particular, in infrared transmission spectrum measurement of a specimen having a rough surface or a specimen containing a pulverized inorganic compound, dispersion occurs on the surface of the specimen or in the specimen. This has a great influence on light with a short wavelength and can lower the transmission spectrum (%T) in the high wavenumber region. The ATR spectrum (%T) in the low wavenumber region of a specimen containing carbon black has a falling tendency.

Since these spectra have a large overall height, the peaks become relatively small, making it difficult to conduct a library search.

It is difficult to measure changes in the baseline directly, so that those changes in the baseline must be estimated.

For example, in Japanese Unexamined Patent Application Publication No. Hei-05-60614, a circle having a diameter not smaller than twice the full width at half maximum of a peak, an ellipse, or the like is moved in contact with but not intersecting the actually measured spectrum, and a part of the track is used as the baseline.

Although conventional methods related to baseline correction such as that described above have advantages, there are many problems in actual use, such as high computational load and a wide range of parameters to be specified, such as the shape and size of the figure.

A simple, low-computational-load baseline setting method that can be used for any shape of spectrum, rising toward the right, rising toward the left, rising in the middle, falling in the middle, or being wavy, has been desired.

SUMMARY OF THE INVENTION

In view of the related art, it is an object of the present invention to provide a simple, high-accuracy baseline setting method with low computational load.

Accordingly, there is provided a baseline setting method as set out in the independent claims 1, 2, 4 and 5. An advantageous development is defined in the dependent claim 3.

The track of a baseline is calculated by using a circle or ellipse, as described below.

First, in a plane having a reference axis X and a measured value axis Y extending orthogonally to the reference axis X, a semicircle or semi-ellipse C centered on the reference axis X, expressed by

$$x^2 + a^2 y^2 = r^2$$

$$(f(x) = \{(r^2 - x^2)^{1/2}\}/a)$$

is specified, where $y \geq 0$ if peaks are seen in the positive Y direction or $y \leq 0$ if peaks are seen in the negative Y direction.

The values of "a" and "r" of the semicircle or semi-ellipse C are specified empirically.

If the X radius R of the semicircle or semi-ellipse is too small, the baseline is set at a high position in a peak and becomes too close to the spectrum in the peak.

Therefore, it is preferable to set the X radius R of the semicircle or semi-ellipse C to twice the full width at half maximum, W, or greater, where W is the full width at half maximum of a peak having the greatest peak width among a plurality of peaks appearing in the measurement curve.

Optimum values of curvature "a" and radius "r" should be specified with the shape and inclination of the base of the measured curve and the peak width taken into account.

If peaks are seen in the positive Y direction, points $(x_i - r, f_{Xi}(x_i - r))$ to $(x_i + r, f_{Xi}(x_i + r))$ on the semicircle or semi-ellipse $C_{xi}$ centered at point $(x_i, 0)$ are compared with points $(x_i - r, y_{Xi-r})$ to $(x_i + r, y_{Xi+r})$ on the spectrum. Differences $I_{Xi-r}$ to $I_{Xi+r}$ corresponding to the individual points on the reference axis X are obtained as follows:

$$l_{Xi-r} = y_{Xi-r} - f_{Xi}(x_i - r)$$

$$\vdots$$

$$l_{Xi+r} = y_{Xi+r} - f_{Xi}(x_i + r)$$

(If peaks are seen in the negative Y direction,

$$l_{Xi-r} = f_{Xi}(x_i - r) - y_{Xi-r}$$

$$\vdots$$

$$l_{Xi+r} = f_{Xi}(x_i + r) - y_{Xi+r}$$

are calculated.) The minimum value among $l_{Xi-r}$ to $l_{Xi+r}$ is specified as $l_{Xi}(x_i)_{min}$.

Then, even when the measured curve has its peak on point $(x_i, 0)$ on the X-axis, corresponding to the center of the semicircle or semi-ellipse, if the X radius of the semicircle or semi-ellipse is greater than the maximum peak width appearing in the spectrum, $l_{xi}(x_i)_{min}$ is calculated at an off-peak position on the X-axis.

Semicircles or semi-ellipses $C_{Xi-r}$ to $C_{Xi+r}$ are moved in the range of $(x_i - r, 0)$ to $(x_i + r, 0)$, $l_{Xi-r}(x_i)_{min}$ to $l_{Xi+r}(x_i)_{min}$ are obtained, by following the procedure described above, and

$$l_{Xi-r}(x_i)_{min} + f_{Xi-r}(x_i)$$

$$\vdots$$

$$l_{Xi+r}(x_i)_{min} + f_{Xi+r}(x_i)$$

are calculated. (If peaks are seen in the negative Y direction,

$$f_{Xi-r}(x_i) - l_{Xi-r}(x_i)_{min}$$

$$\vdots$$

$$f_{Xi+r}(x_i) - l_{Xi+r}(x_i)_{min}$$

are calculated.)

The maximum value (or the minimum value, if peaks are seen in the negative Y direction) among those values is specified as $L_{(xi)}$.

Then, a point $(x_i, L_{(xi)})$ is set as a baseline point.

As has been described above, by specifying appropriate values of curvature "a" and radius "r" for f(x), a natural baseline can be set for any type of spectrum having a measured curve rising toward the right, rising toward the left, rising in the middle, falling in the middle, or being wavy.

The point $(x_i, 0)$ is moved in the X direction, $L_{(x(i+1))}$ is calculated by following the procedure described above, and a baseline point corresponding to a specific point $(x_{(i+1)}, y_{X(i+1)})$ on the measured curve is set as $(x_{(i+1)}, L_{(x(i+1))})$.

The baseline points corresponding to individual points on the measured curve are calculated in the same way.

By connecting these baseline points, the baseline of the measured curve can be specified.

The procedure for the baseline setting method using a quadratic curve is almost the same as the procedure for the baseline setting method using a semicircle or semi-ellipse. If peaks are seen in the positive Y direction, a quadratic curve expressed by

$$f(x) = a(x - b)^2 + c$$

$$a < 0$$

is specified in the range of

$$b - M \le x \le b + M.$$

If peaks are seen in the negative Y direction, the quadratic curve is expressed by

$$f(x) = a(x - b)^2 + c$$

$$a > 0.$$

First, a quadratic curve D centered at a point on the reference axis X, represented by

$$y = a(x - b)^2 + c$$

$$(f(x) = a(x - b)^2 + c)$$

is specified, under the following conditions:

$$b - M \leq x \leq b + M$$

$$M \geq W$$

a < 0 (a > 0, if peaks are seen in the negative Y direction) where W is the full width at half maximum of a peak having the greatest peak width among a plurality of peaks appearing in the measured curve. The value of "a" is specified empirically. The values of "b" and "c" are specified by the person performing the measurement as the initial position (b, c) of the vertex of the quadratic curve D.

The value of M should not be smaller than the full width at half maximum, W, of the peak having the greatest peak width among the plurality of peaks appearing in the measured curve. If the value of M is smaller, the baseline is specified at a high in a peak and becomes too close to the spectrum in the peak.

An optimum value of "a" should be specified empirically with the shape and inclination of the base of the measured curve and the peak width taken into account.

If peaks are seen in the positive Y direction, individual points $(x_i - r, f_{Xi}(x_i - r))$ to $(x_i + r, f_{Xi}(x_i + r))$ on the quadratic curve $D_{Xi}$ having its vertex at point $(x_i, c)$ $(x_i = b$ at the beginning of measurement) are compared with points $(x_i - r, y_{Xi-r})$ to $(x_i + r, y_{Xi+r})$ on the spectrum. Differences $l_{Xi-r}$ to $l_{Xi+r}$ corresponding to the individual points on the reference axis X are obtained as follows:

$$l_{Xi-r} = y_{Xi-r} - f_{Xi}(x_i - r)$$

$$\vdots$$

$$l_{Xi+r} = y_{Xi+r} - f_{Xi}(x_i + r)$$

(If peaks are seen in the negative Y direction,

$$l_{Xi-r} = f_{Xi}(x_i - r) - y_{Xi-r}$$

$$\vdots$$

$$l_{Xi+r} = f_{Xi}(x_i + r) - y_{Xi+r}$$

are calculated.) The minimum value among $l_{Xi-r}$ to $l_{Xi+r}$ is specified as $l_{Xi}(x_i)_{min}$.

Then, even when the measured curve has a peak at point $(x_i, 0)$ on the X-axis, corresponding to the vertex of the quadratic curve, if the value of "a" is specified to set the baseline to an appropriate height with respect to the peak and if the width (= 2M) of the quadratic curve is greater than the maximum peak width appearing on the spectrum, $l_{Xi}(x_i)_{min}$ is calculated at an off-peak position on the X-axis.

Quadratic curves $D_{Xi-r}$ to $D_{Xi+r}$ are moved in the range of $(x_i - r, 0)$ to $(x_i + r, 0)$, $l_{Xi-r}(x_i)_{min}$ to $l_{Xi+r}(x_i)_{min}$ are obtained by following the procedure as described above, and

$$l_{Xi-r}(x_i)_{min} + f_{Xi-r}(x_i)$$

$$\vdots$$

$$l_{Xi+r}(x_i)_{min} + f_{Xi+r}(x_i)$$

are calculated. (If peaks are seen in the negative Y direction,

$$f_{Xi-r}(x_i) - l_{Xi-r}(x_i)_{min}$$

$$\vdots$$

$$f_{Xi+r}(x_i) - l_{Xi+r}(x_i)_{min}$$

are calculated.)

The maximum value (or the minimum value, if peaks are seen in the negative Y direction) among those values is specified as $L_{(xi)}$.

Then, a point $(x_i, L_{(xi)})$ is set as a baseline point.

As has been described above, by specifying an appropriate value of "a" for f(x), a natural baseline can be set for any type of spectrum having a measured curve rising toward the right, rising toward the left, rising in the middle, falling in the middle, or being wavy.

The vertex is moved in the X direction, $L_{(x(i+1))}$ is calculated by following the procedure described above, and a baseline point corresponding to a specific point $(x_{(i+1)}, y_{X(i+1)})$ on the measured curve is set as $(x_{(i+1)}, L_{(x(i+1))})$.

The baseline points corresponding to the individual points on the measured curve are calculated in the same way.

By connecting these baseline points, the baseline of the measured curve can be specified.

As has been described above, if peaks are seen in the positive Y direction, by scanning a semicircle or semi-ellipse at any position on the X-axis about the reference point $(x_i, 0)$, the minimum values $l_{Xi-r}(x_i)_{min}$ to $l_{Xi+r}(x_i)_{min}$ of difference in height between the spectrum and the figure at individual positions of the figure (having its center in the range of $(x_{i-r})$ to $(x_{i+r})$) are added to the height $f_{Xi-r}(x_i)$ to $f_{Xi+r}(x_i)$ at the reference point $(x_i, 0)$ of the individual positions of the figure, and

$$I_{Xi-r}(x_i)_{min} + f_{Xi-r}(x_i)$$

$$\vdots$$

$$I_{Xi+r}(x_i)_{min} + f_{Xi+r}(x_i)$$

are obtained. The maximum value $L_{(xi)}$ of the sum is obtained as a baseline value. The reference point is moved in the X direction, and the other baseline values are obtained by following the procedure as described above. By this simple method, a highly accurate baseline can be created automatically. Here, the figure should be moved in the X direction alone. Since complicated movements are not required, the computational load is low.

By adjusting the value of "r" to make the X radius R of the semicircle twice the full width at half maximum of a peak having the greatest peak width or greater, even if there is a peak at point $(x_i, 0)$ on the X-axis, where the baseline point is going to be specified, the difference in height between the spectrum and the figure is calculated as the minimum value $I(x_i)_{min}$ at an off-peak X-axis position. Then, the figure is moved as described above, $I_{Xi-r}(x_i)_{min}$ to $I_{Xi+r}(x_i)_{min}$ are calculated, and the values are incorporated in the following calculation:

$$I_{Xi-r}(x_i)_{min} + f_{Xi-r}(x_i)$$

$$\vdots$$

$$I_{Xi+r}(x_i)_{min} + f_{Xi+r}(x_i).$$

Since the values of $I_{Xi-r}(x_i)_{min}$ to $I_{Xi+r}(x_i)_{min}$ are the differences in height between the spectrum and the figure at off-peak positions, they do not become too large, and $L_{(xi)}$ is set to an appropriate value.

If the spectrum rises toward the right, rises toward the left, rises in the middle, falls in the middle, or is wavy, an appropriate baseline can be obtained by adjusting the values of curvature "a" and radius "r" in accordance with the shape and inclination of the entire spectrum and the width of the peak.

When a quadratic curve is used, a quadratic curve D having its vertex at point $(x_i, c)$ ($x_i = b$ at the beginning of the measurement) is formed under the following conditions

$$f(x) = a(x - b)^2 + c$$

$$b - M \leq x \leq b + M$$

$$M \geq W$$

$a < 0$ (if peaks are seen in the positive Y direction) where W is the full width at half maximum of a peak having the greatest peak width among a plurality of peaks appearing in the measured curve, and a baseline is formed by following the procedure described above. By this simple method, a highly accurate baseline can be created automatically.

The values of "b" and "c" are specified as the initial position (b, c) of the quadratic curve.

The figure should be moved in the X direction alone. Since complicated movements are not required, the computational load is low.

If the figure such as a semicircle is moved along the spectrum, the complicated movement of the figure would require manual intervention. According to the present invention, the figure should be moved in the X direction alone. The baseline can be set through a very simple operation. After the initial parameters are specified, the baseline is set almost automatically without any other manual intervention.

BRIEF DESCRIPTION OF THE DRAWINGS

Fig. 1 illustrates the calculation of $Y_{mint} + f_{Xi}(X_i)$ with a semicircle centered at a reference point $(X_i, 0)$, when peaks are seen in the positive Y direction.

Fig. 2 illustrates the calculation of $Y_{min(t+1)} + f_{Xi+d}(X_i)$ with a semicircle centered at point $(X_i + d, 0)$ while the reference point is $(X_i, 0)$, when peaks are seen in the positive Y direction.

Fig. 3 illustrates the calculation when the center of the semicircle is moved in the range of $(X_i - r, 0)$ to $(X_i + r, 0)$ while the reference point is $(X_i, 0)$, when peaks are seen in the positive Y direction.

Fig. 4 illustrates the setting of baseline points by moving the reference point and using a semicircle at the reference point in accordance with a baseline setting method according to the present invention, when peaks are seen in the positive Y direction.

Fig. 5 illustrates the position of $Y_{min}$ when the baseline is set by using a semicircle ($y \leq 0$), if peaks are seen in the negative Y direction.

Fig. 6 illustrates the calculation when the center of the semicircle ($y \leq 0$) is moved in the range of $(X_i - r, 0)$ to $(X_i + r, 0)$ while the reference point is $(X_i, 0)$, if peaks are seen in the negative Y direction.

Fig. 7 shows the correspondence between positions of the figures and points plotted in Fig. 6, where the value of $Y_{min}$ is subtracted from the height of each figure at the reference point $(X_i, 0)$, and the calculated difference is plotted as height on $x = X_i$.

Fig. 8 shows an example of a baseline setting method according to the present invention, by using a semicircle.

Fig. 9 shows an example of baseline setting by using a line segment, and by adjusting the position of the line segment according to the method of the present invention.

Fig. 10 shows an example of the baseline setting method according to the present invention, by using a spectrum differing from that used in Fig. 8 and a semicircle.

Fig. 11 shows an example of baseline setting by using a spectrum differing from that used in Fig. 9 and a line segment, and by adjusting the position of the line segment according to the method of the present invention.

Fig. 12 shows an example of a baseline setting method according to the present invention, by using a semicircle, when peaks are seen in the negative Y direction.

Fig. 13 illustrates the calculation of $Y_{min}$ in the baseline setting method according to the present invention, by using a semicircle with its circumference intersecting the measured curve.

Fig. 14 illustrates the calculation of $Y_{min1} + f_{Xi}(X_i)$ with a quadratic curve having its vertex at a reference point $(X_i, 0)$, when peaks are seen in the positive Y direction.

Fig. 15 illustrates the calculation of $Y_{min2} + f_{Xi+d}(X_i)$ with a quadratic curve having its vertex at point $(X_i + d, 0)$ while the reference point is $(X_i, 0)$, when peaks are seen in the positive Y direction.

Fig. 16 illustrates the setting of a baseline point by moving the reference point and using a quadratic curve at the moved reference point in accordance with the baseline setting method according to the present invention, when peaks are seen in the positive Y direction.

Fig. 17 illustrates the calculation of $f_{Xi}(X_i) + Y_{min1}$ in an initial position (b, c) of the vertex of a quadratic curve D, the initial position being aligned with the x coordinate of a peak of a spectrum and the height of the peak, while the reference point is $(Xi, 0)$.

Fig. 18 illustrates the calculation of $f_{Xi+r}(X_i) + Y_{min2}$ when the quadratic curve D is moved from the initial position (b, c) of the vertex by distance "r" in the X direction, the initial position being aligned with the x coordinate of the peak of the spectrum and the height of the peak, while the reference point is $(X_i, 0)$.

### DESCRIPTION OF THE PREFERRED EMBODIMENTS

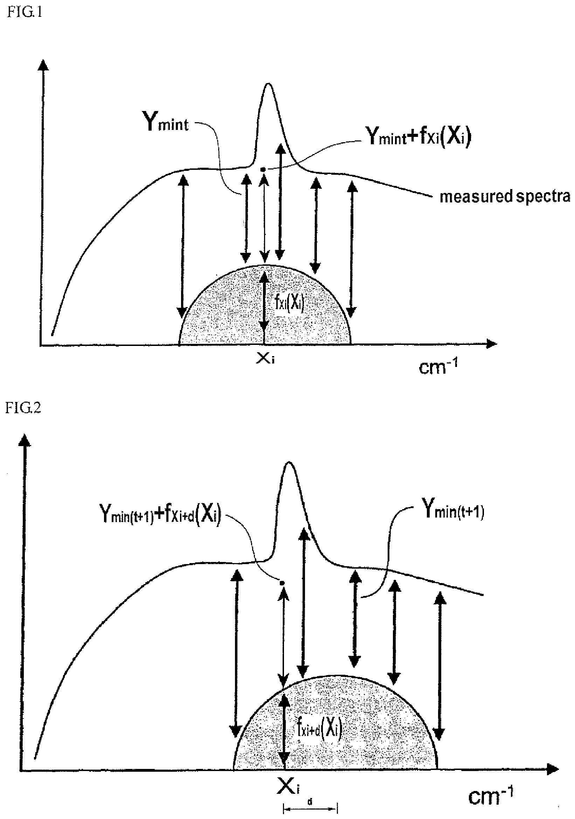

With reference to Figs. 1 to 4, a procedure for setting a baseline by using a semicircle at point (X, 0) when peaks are seen in the positive Y direction will be described.

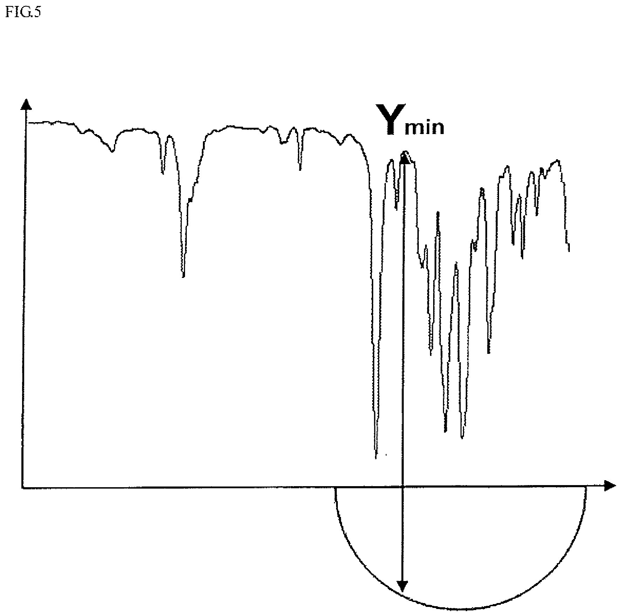

With reference to Figs. 5 to 7, a baseline point setting process according to the present invention, when the peaks are seen in the negative Y direction, will be described.

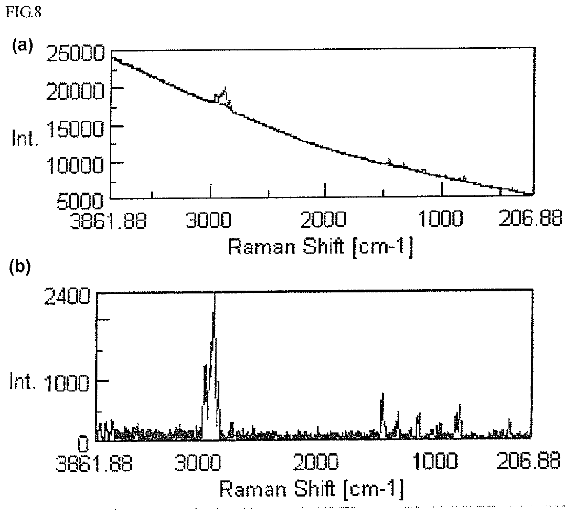

Figs. 8 to 11 show baselines specified by using a line or semicircle. The baselines specified by using a semicircles or line will be compared while the adjustment of "a" is described.

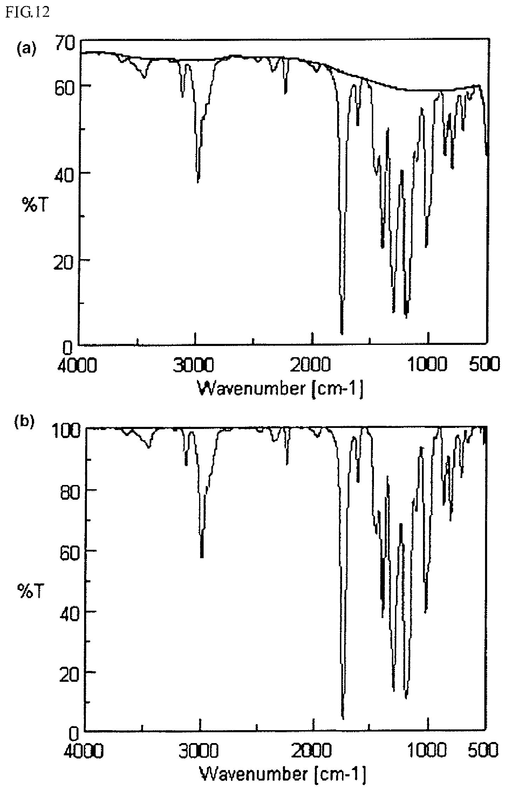

Fig. 12 shows an example in which the baseline is specified by using a semicircle and the spectrum is baseline-corrected, when peaks are seen in the negative Y direction.

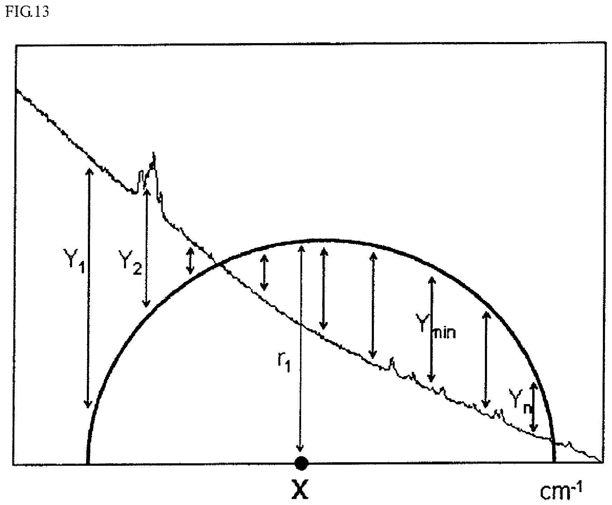

Fig. 13 illustrates a spectrum intersecting a semicircle having a large diameter.

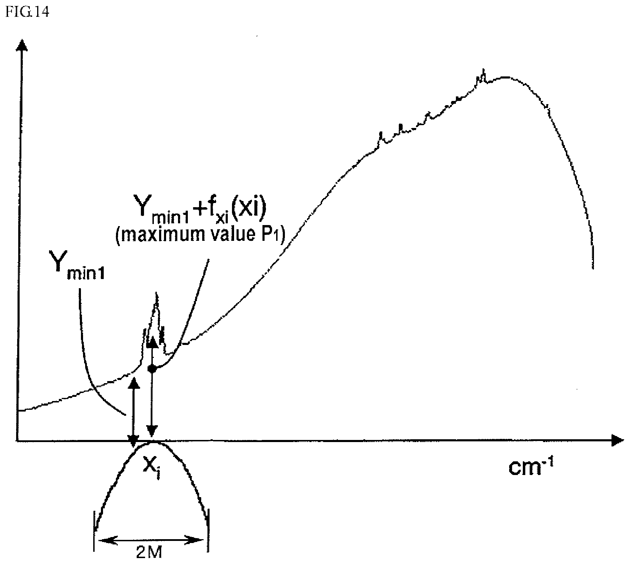

With reference to Figs. 14 to 16, a procedure for setting a baseline by using a quadratic curve with its vertex at point (X, 0) will be described.

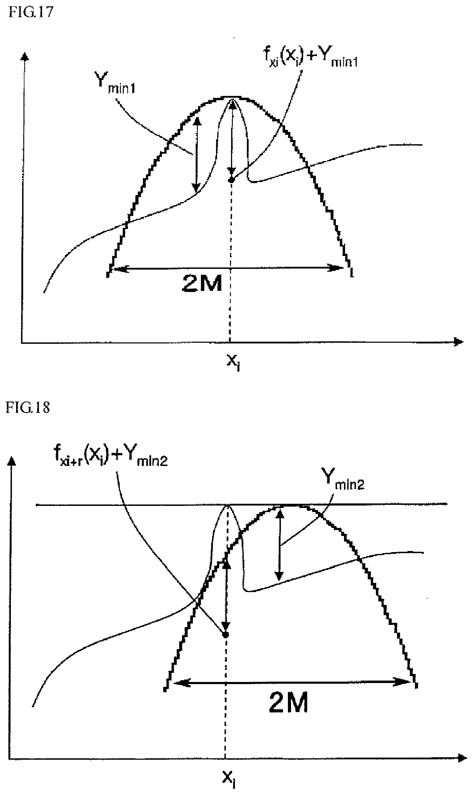

Figs. 17 and 18 show an example in which the initial position (b, c) of the vertex of a quadratic curve D is aligned with the x coordinate of a peak of the measured line and the height of the peak.

As a first embodiment of the present invention, a procedure for setting a baseline by using a semicircle when peaks are seen in the positive Y direction will be described with reference to Figs. 1 to 4.

The operator first specifies a circle or ellipse with its center at point $(X_i, 0)$.

The circle or ellipse is expressed by

$$X^2 + a^2Y^2 = r^2$$

$$(f(x) = \{(r^2 - x^2)^{1/2}\}/a)$$

and set by specifying the values of curvature "a" and radius "r".

The values of "a" and "r" of the circle or ellipse are specified empirically. It is preferable to set the X radius R of the semicircle or semi-ellipse C to twice the full width at half maximum, W, or greater, where W is the full width at half maximum of a peak having the greatest peak width among a plurality of peaks appearing in the measured curve, so that baseline points are set in an appropriate height.

From the spectrum S at each point in the horizontal axis region containing the figure, a measured value S at (x, 0) in the range of $(X_i - r, 0)$ to $(X_i + r, 0)$ is compared with $\{(r^2 - x^2)^{1/2}\}/a$ $(y \geq 0)$ to calculate the difference Y between them:

$$Y = (S - \{(r^2 - x^2)^{1/2}\}/a).$$

Then, the minimum value $Y_{mint}$ of Y is calculated.

The calculated $Y_{mint}$ is added to the height $f_{xi}(X_i)$ of the figure at point $(X_i, 0)$ to obtain (see Fig. 1)

$$Y_{mint} + f_{xi}(X_i).$$

The figure is moved by "d" parallel to the X-axis within a range including point $(X_i, 0)$.

From the spectrum at each point in the horizontal axis region containing the figure, a measured value "S" in the range of $(X_i + d - r, 0)$ to $(X_i + d + r, 0)$ is compared with $\{(r^2 - x^2)^{1/2}\}/a$ $(y \geq 0)$ to calculate the difference Y between them:

$$Y = (S - \{(r^2 - x^2)^{1/2}\}/a).$$

Then, the minimum value $Y_{min(t+1)}$ of Y is calculated.

The calculated $Y_{min(t+1)}$ is added to the height $f_{Xi+d}(X_i)$ of the figure at point $(X_i, 0)$ to obtain (see Fig. 2)

$$Y_{min(t+1)} + f_{xi+d}(X_i).$$

By repeating this step while moving the figure within the range of $(X - r, 0)$ to $(X + r, 0)$, the following are calculated:

$$Y_{min1} + f_{Xi-r}(X_i)$$
$$\vdots$$
$$Y_{mint} + f_{Xi}(X_i)$$
$$Y_{min(t+1)} + f_{Xi+d}(X_i)$$
$$\vdots$$
$$Y_{minn} + f_{xi+r}(X_i).$$

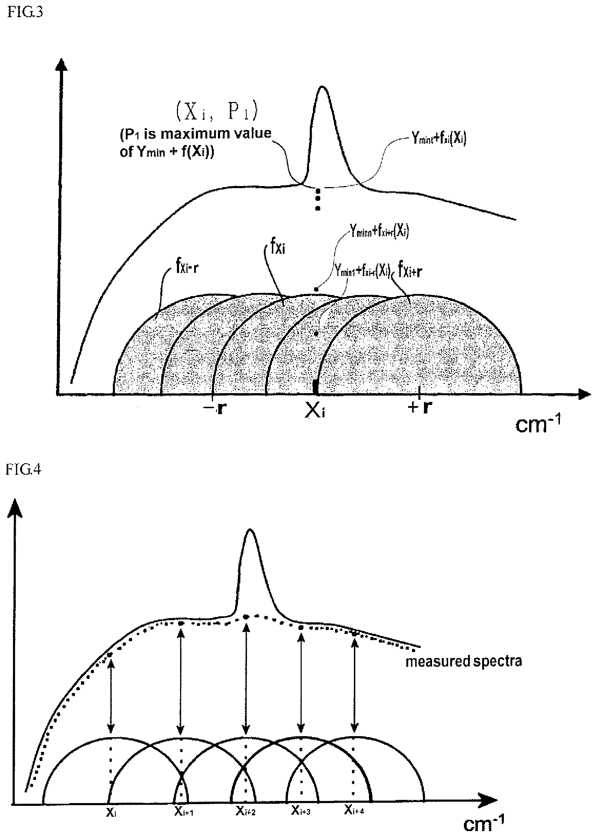

From the results, the maximum value $P_1$ is selected. A baseline point $(X_i, P_1)$ at $(X_i, 0)$ is specified (Fig. 3).

In Fig. 3, a peak on the measured curve is on the reference point $(X_i, 0)$, but $Y_{min}$ is set in an off-peak position in each of the five shown semicircles ($Y_{min}$ values are calculated separately for the individual circles). By calculating

$$Y_{min1} + f_{Xi-r}(X_i)$$
$$\vdots$$
$$Y_{mint} + f_{Xi}(X_i)$$
$$Y_{min(t+1)} + f_{Xi+d}(X_i)$$
$$\vdots$$
$$Y_{minn} + f_{Xi+r}(X_i)\}$$

and selecting the maximum value $P_1$, the baseline point $(X_i, P_1)$ is set to an appropriate height.

By moving the point $(X_i, 0)$ in the X direction and repeating the same steps for point $(X_{(i+1)}, 0)$, the maximum value $P_2$ is set as a baseline point at point $(X_{(i+1)}, 0)$.

The same procedure is repeated to calculate baseline points P at (Xi, 0), $(X_{(i+1)}, 0)$, to $(X_{(i+n-1)}, 0)$. By connecting those points, a baseline BL is obtained (Fig. 4).

The present invention can also be used when peaks are seen in the negative Y direction. The procedure differs from the procedure when peaks are seen in the positive Y direction, and a supplementary description will be added.

When peaks are shown in the negative Y direction, a semicircle must be specified in the range of $y \leq 0$, as shown in Fig. 5.

Moreover, $Y_{min}$ should be taken from a position where the absolute value of the distance between the circumference of the circle and the spectrum is the greatest. So, Ymin is set to f(x) - S, where f(x) is the value of height of the figure, and S is a measured value.

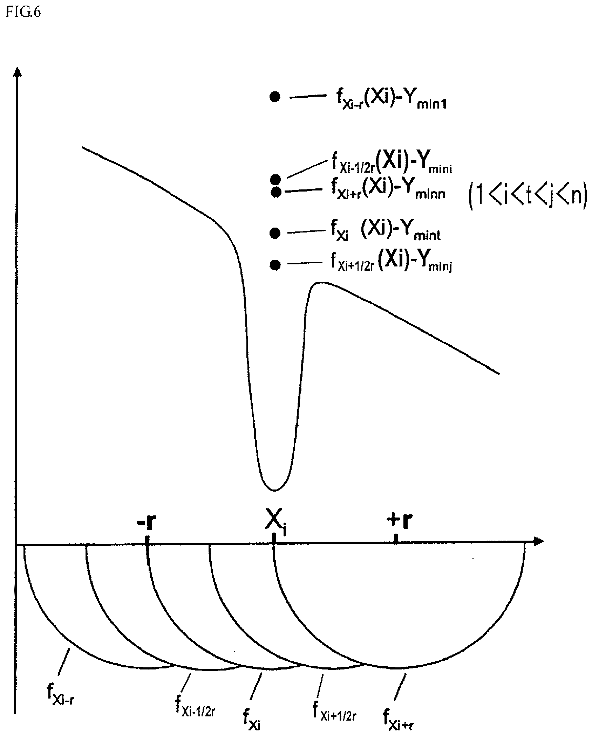

The height of the figure at $(X_i, 0)$ is expressed as $f(x_i)$, as shown in Fig. 6. While the figure is moved in the X direction, the following is obtained:

$$f_{Xi-r}(x_i) - Y_{min1}$$
$$\vdots$$
$$f_{Xi-1/2r}(x_i) - Y_{mini}$$
$$\vdots$$
$$f_{Xi}(x_i) - Y_{mint}$$
$$\vdots$$
$$f_{Xi+1/2r}(x_i) - Y_{minj}$$
$$\vdots$$
$$f_{Xi+r}(x_i) - Y_{minn}.$$

In Fig. 6, a plurality of points are plotted, and the minimum value $f_{Xi+1/2r}(X_i) - Y_{minj}$ becomes a baseline point.

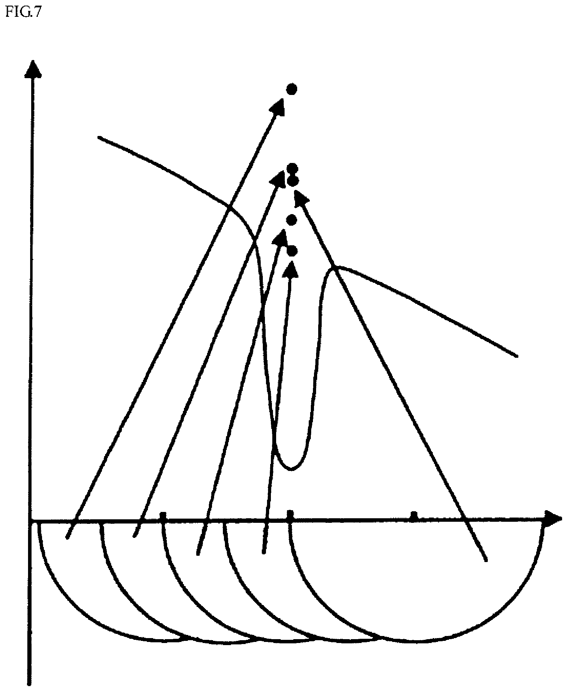

Fig. 7 shows arrows indicating the correspondence between the points plotted in Fig. 6 and circles.

If the specimen emits light in absorbance measurement with an FT-IR or ultraviolet-visible photometer, the amount of light reaching the detector increases, decreasing the absorbance. In Raman scattering intensity measurement using a Raman spectrometer, if the specimen emits light, the spectrum can be raised.

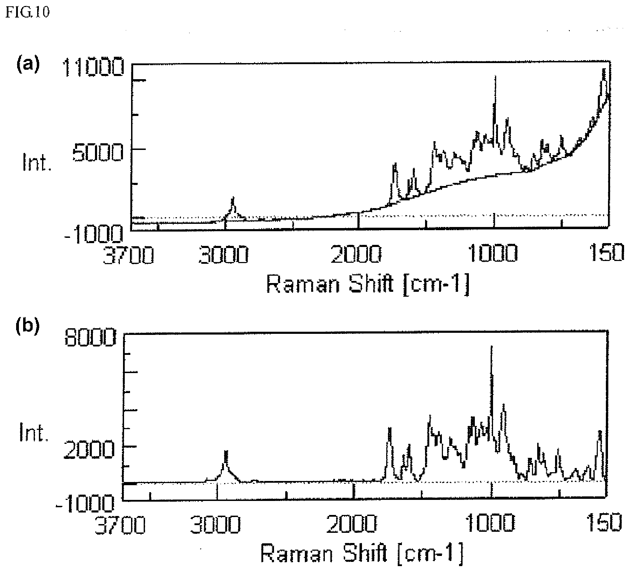

In those cases, baseline correction using a circle, as shown in Fig. 8 or 10, can scale down the vertical axis, making it possible to detect a small peak that would not be detected on the previous scale of the vertical axis. Accordingly, the hit ratio in a library search can be improved.

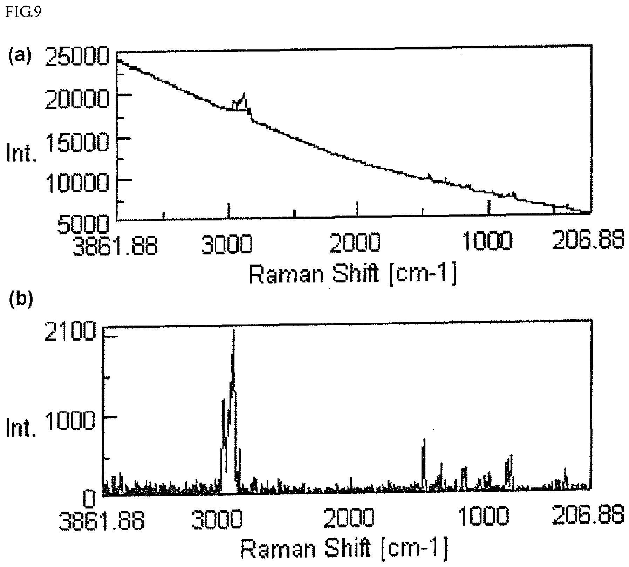

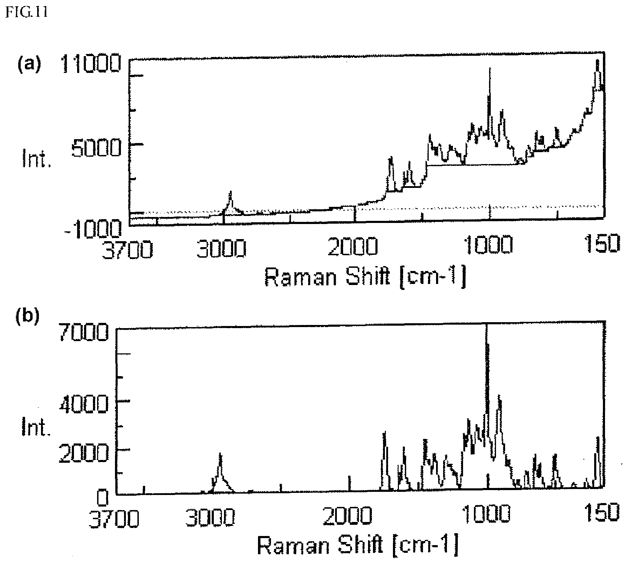

For the comparison, Figs. 9 and 11 show examples of baseline setting where a figure is adjusted according to the present invention, and a line segment is used.

(1) Fig. 8 shows an example using a circle, and Fig. 9 shows an example using a line segment, given for comparison. Although the baseline setting by using a line segment is not included in the scope of the present invention, it can be regarded as an example using an ellipse having a very small Y diameter because F(x), or the ellipse having a very small Y diameter, is close to a line segment.

The spectra shown in Figs. 8(a) and 9(a) are rising toward the left.

The scale of the Y-axis after baseline correction in Fig. 9(b) is smaller than that in Fig. 8(b).

That is because the baseline in Fig. 9(a) is parallel to the X-axis around a peak of the spectrum appearing in the range of 2800 to 3000 ($cm^{-1}$).

The baseline-corrected spectrum seen in the range of 2800 to 3000 ($cm^{-1}$) in Fig. 9(b) has a narrower shape than that in Fig. 8(b), and the corrected spectrum has a missing part. Therefore, it is understood that the baseline in Fig. 9(b) is inappropriate.

(2) Fig. 10 shows an example using a circle, and Fig. 11 shows an example using a line segment, given for comparison.

The baseline shown in Fig. 11(a) has a part parallel to the X-axis in the range of 500 to 1700 [$cm^{-1}$], and the shape of the baseline-corrected spectrum differs from that in Fig. 10(b).

Like the spectrum shown in Fig. 9(b), the baseline-corrected spectrum in Fig. 11(b) has a missing part. An ideal baseline provides a spectrum without a missing part, as shown in Fig. 10(a).

Fig. 12 shows an example of baseline setting according to the present invention, where a semicircle is used when peaks are seen in the negative Y direction.

The upper graph in Fig. 12 shows peaks in the negative Y direction and a spectrum declining toward the right. After baseline correction according to the present invention, the vertical axis representing transmittance (%T) is scaled down, and the peaks of the spectrum are emphasized.

Fig. 13 shows a case where the circumference of a circle intersects a measured curve.

When peaks are seen in the positive Y direction, if $f(x)$ $(= \{(r^2 - x^2)^{1/2}\}/a)$ $(y \geq 0)$ is greater than a specific point $y_i$ on the measured curve, $l(x_i)min$ $[= y_i - f(x)]$ becomes a negative value. Even in that case, the maximum value of

$$l_{Xi-r}(x_i)_{min} + f_{Xi-r}(x_i)$$

$$:$$

$$l_{Xi+r}(x_i)_{min} + f_{Xi+r}(x_i)$$

is selected as $L_{(xi)}$, and a baseline point $(x_i, L_{(xi)})$ can be calculated normally in the same procedure.

As a second embodiment of the present invention, a procedure for setting a baseline by using a quadratic curve will be described with reference to Figs. 14 to 16.

If peaks are seen in the positive Y direction, the operator first specifies a quadratic curve having its vertex at point $(X_i, 0)$, under the following conditions:

$$f(x) = a(x - b)^2 + c$$

$$b - M \leq x \leq b + M$$

$$M \geq W$$

$$a < 0$$

where W is the full width at half maximum of a peak having the greatest peak width among a plurality of peaks appearing in the measured curve.

The quadratic curve expressed by

$$y = a(x - b)^2 + c$$

$$(f(x) = a(x - b)^2 + c)$$

is set by specifying the values of "a", "b", and "c".

The parameter "a" of the quadratic curve is set empirically, with the width of the peak taken into account.

If peaks are seen in the positive Y direction, however, the value of "a" should be negative. The value ofM is specified to satisfy $W \leq M$, where W is the full width at half maximum of a peak having the greatest peak width among a plurality of peaks appearing in the measured curve. The range of the quadratic curve must be specified by setting the following:

$$b - M \leq x \leq b + M$$

The initial position (b, c) of the vertex of the quadratic curve is also specified.

In the second embodiment, "c" is set to zero (hereafter $f(x) = a(x - b)2$), but "c" is not confined to zero.

If peaks of the measured curve are seen in the negative Y direction, the value of "a" should be positive.

From the spectrum at each point in the horizontal axis region containing the figure, the measured value S in the range of $(X_i - M, 0)$ to $(X_i + M, 0)$ and the height $a(x - b)^2$ of the figure in that position are obtained to calculate the difference Y between them:

$$Y = \{S - a(x - b)^2\}.$$

The minimum value $Y_{min1}$ of Y is calculated next.

The height $f_{Xi}(X_i)$ of the figure at point $(X_i, 0)$ is added to $Y_{min1}$ to obtain (see Fig. 14)

$$Y_{min1} + f_{Xi}(X_i).$$

If peaks are seen in the negative Y direction,

$$Y = \{a(x - b)^2 - S\}$$

is obtained, and the minimum value of Y should be set as $Y_{min1}$.

The figure is moved by "d" parallel to the X-axis within the range including point $(X_i, 0)$.

From the spectrum at each point in the horizontal axis region including the figure, a measured value S in the range of $(X_i + d - M, 0)$ to $(X_i + d + M, 0)$ is compared with the height $a(x - b)^2$ of the figure in that position to calculate the difference Y between them:

$$Y = \{S - a(x - b)^2\}.$$

The minimum value of Y is calculated as $Y_{min2}$.

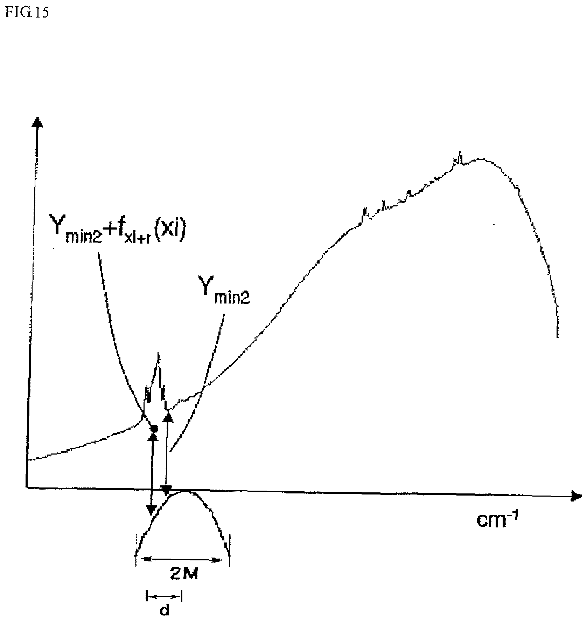

The height $f_{Xi+d}(X_i)$ of the figure at point $(X_i, 0)$ and $Y_{min2}$ are added to obtain (see Fig. 15)

$$Y_{min2} + f_{Xi+d}(X_i).$$

By repeating this step,

$$Y_{min1} + f_{Xi}(X_i)$$

$$Y_{min2} + f_{Xi+d}(X_i)$$

$$\vdots$$

$$Y_{minn} + f_{Xi+d(n-1)}(X_i)$$

are calculated. The maximum value of those values is selected as $P_1$, and a baseline point $(X_i, P_1)$ at point $(X_i, 0)$ is specified.

The maximum value $P_1$ corresponds to the vertex $(X_i, 0)$ of the figure in Fig. 14. That is,

$$Y_{min1} + f_{Xi}(X_i)$$

becomes the maximum value $P_1$.

If peaks of the measured curve are seen in the negative Y direction, the minimum value of

$$f_{Xi}(X_i) - Y_{min1}$$

$$f_{Xi+d}(X_i) - Y_{min2}$$

$$\vdots$$

$$f_{Xi+d(n-1)}(X_i) - Y_{minn}$$

should be set as $P_1$.

Point $(X_i, 0)$ is moved in the X direction, the same operation is performed at point $(X_{(i+1)}, 0)$, and the maximum value $P_2$ is specified as a baseline point at point $(X_{(i+1)}, 0)$.

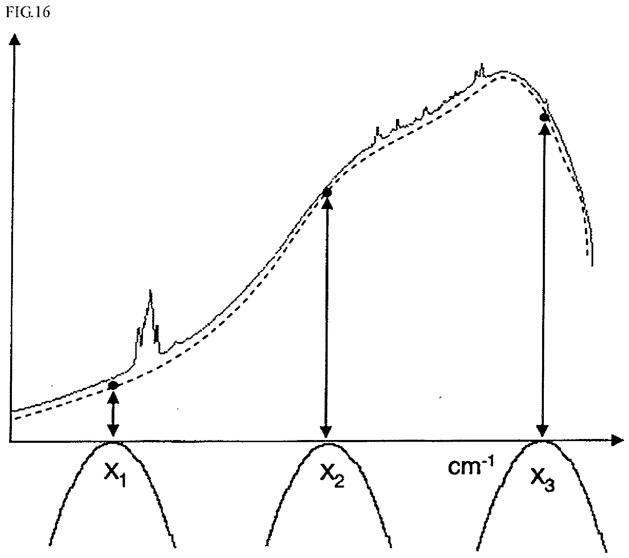

By repeating this operation, baseline points P at points $(X_i, 0)$ through $(X_{(i+1)}, 0)$ to $(X_{(i+n-1)}, 0)$ are calculated. By connecting those points, a baseline BL is obtained (Fig. 16). Fig. 16 shows three baseline points $(X_1$ to $X_3)$, but more points are plotted in practice.

Figs. 17 and 18 show examples in which the initial position (b, c) of the vertex of a quadratic curve D is aligned with the height of the peak and the x coordinate of the peak of the spectrum. The quadratic curve shown in Fig. 18 has been moved by distance "r" in the X direction from the position shown in Fig. 17.

If $f(x)$ $(= a(x - b)^2 + c)$ is greater than a specific

point $y_i$ on the measured curve, the value of $l(x_i)_{min}$ [= $y_{Xi}$ - $f(x)$] becomes negative. Even in that case, the maximum value of

$$l_{Xi\text{-}r}(x_i)_{min} + f_{Xi\text{-}r}(x_i)$$

$$:$$

$$l_{Xi\text{+}r}(x_i)_{min} + f_{Xi\text{+}r}(x_i)$$

is specified as $L_{(xi)}$, and a baseline point $(x_i, L_{(xi)})$ can be calculated normally in the same procedure.

## Claims

1. A baseline setting method for a measured curve plotted on a reference axis X and a measured value axis Y extending in a direction orthogonal to the reference axis X, the measured curve having a single measured value $y_i$ identified with respect to a point $x_i$ on the reference axis X, the baseline setting method comprising the steps of:

specifying a semicircle or semi-ellipse $C_{xi}$ centered on the reference axis X and an X radius R, expressed by

$$x^2 + a^2y^2 = r^2$$

$$y \geq 0$$

$$f_{Xi}(x) = \{(r^2 - x^2)^{1/2}\}/a$$

if peaks of the measured curve are seen in the positive Y direction;
comparing individual points $(x_i - r, f_{Xi}(x_i - r))$ to $(x_i + r, f_{Xi}(x_i + r))$ of the semicircle or semi-ellipse $C_{Xi}$ centered at $(x_i, 0)$ with the corresponding points $(x_i - r, Y_{Xi\text{-}r})$ to $(x_1 + r, y_{Xi\text{+}r})$ on the measured curve to calculate

$$l_{xi\text{-}r} = y_{xi\text{-}r} - f_{Xi}(x_i - r)$$

$$:$$

$$l_{xi\text{+}r} = y_{xi\text{+}r} - f_{Xi}(x_i + r)$$

and to specify the minimum value of $l_{Xi\text{-}r}$ to $l_{Xi\text{+}r}$ as $l_{(Xi)min}$;
moving the centered position $(x_i, 0)$ of the semicircle or semi-ellipse $C_{xi}$ by a distance d parallel to the axis X within a range including point $(Xi, 0)$;

recalculating the minimum value of $l_{(Xi\text{+}d)min}$ at the centered position $(x_i + d, 0)$ of the semicircle or semi-ellipse $C_{Xi}$;
repeating the steps of moving and recalculating while moving the figure within the range of $(Xi - r, 0)$ to $(Xi + r, 0)$;
specifying the maximum value of

$$l(x_i - r)_{min} + f_{Xi\text{-}r}(x_i)$$

$$:$$

$$l(x_i + r)_{min} + f_{Xi\text{+}r}(x_i)$$

obtained with respect to each of semicircles or semi-ellipses $C_{Xi\text{-}r}$ to $C_{Xi\text{+}r}$ centered at $(x_i - r, 0)$ to $(x_i + r, 0)$, as $L_{(xi)}$;
setting a baseline point $(x_i, L_{(xi)})$ corresponding to a specific point $(x_i, y_i)$ on the measured curve; and
connecting the baseline points corresponding to the individual points on the measured curve, to form a baseline.

2. A baseline setting method for a measured curve plotted on a reference axis X and a measured value axis Y extending in a direction orthogonal to the reference axis X, the measured curve having a single measured value $y_i$ identified with respect to each point $x_i$ on the reference axis X, the baseline setting method comprising the steps of:

specifying a semicircle or semi-ellipse $C_{xi}$ centered on the reference axis X and an X radius, expressed by

$$x^2 + a^2y^2 = r^2$$

$$y \leq 0$$

$$f_{Xi}(x) = \{(r^2 - x^2)^{1/2}\}/a$$

if peaks of the measured curve are seen in the negative Y direction;
comparing individual points $(x_i - r, f_{Xi}(x_i - r))$ to $(x_i + r, f_{Xi}(x_i + r))$ of the semicircle or semi-ellipse $C_{Xi}$ centered at $(x_i, 0)$ with the corresponding points $(x_i - r, y_{Xi\text{-}r})$ to $(x_i + r, y_{Xi\text{+}r})$ on the measured

curve to calculate

$$l_{Xi-r} = f_{Xi}(x_i - r) - y_{Xi-r}$$

$$\vdots$$

$$l_{Xi+r} = f_{Xi}(x_i + r) - y_{Xi+r}$$

and to specify the minimum value of $l_{Xi-r}$ to $l_{Xi+r}$ as $l_{(Xi)min}$;
moving the centered position $(x_i, 0)$ of the semicircle or semi-ellipse $C_{Xi}$ by a distance d parallel to the axis X within a range including point $(Xi, 0)$;
recalculating the minimum value of $l_{(Xi+d)min}$ at the centered position $(x_i+d, 0)$ of the semicircle or semi-ellipse $C_{Xi}$;
repeating the steps of moving and recalculating while moving the figure the range of $(Xi-r, 0)$ to $(Xi+r, 0)$;
specifying the minimum value of

$$f_{Xi-r}(x_i) - l(x_i - r)_{min}$$

$$\vdots$$

$$f_{Xi+r}(x_i) - l(x_i + r)_{min}$$

obtained with respect to each of semicircles or semi-ellipses $C_{Xi-r}$ to $C_{Xi+r}$ centered at $(x_i - r, 0)$ to $(x_i + r, 0)$, as $L_{(xi)}$;
setting a baseline point $(x_i, L_{(xi)})$ corresponding to a specific point $(x_i, y_i)$ on the measured curve; and
connecting the baseline points corresponding to the individual points on the measured curve, to form a baseline.

3. A baseline setting method according to one of Claims 1 and 2, wherein the X radius R of the semicircle or semi-ellipse $C_{Xi}$ is specified to be at least twice the full width at half maximum, W, of a peak having the greatest peak width among a plurality of peaks seen in the measured curve.

4. A baseline setting method for a measured curve plotted on a reference axis X and a measured value axis Y extending in a direction orthogonal to the reference axis X, the measured curve having a single measured value $y_i$ identified with respect to each point $x_i$ on the reference axis X, the baseline setting method comprising the steps of:

specifying a quadratic curve $D_{Xi}$ centered on the reference axis X, expressed by

$$y = a(x - b)^2 + c$$

under the conditions:

$$b - M \leq x \leq b + M$$

$$M \geq W$$

$$a < 0$$

$$f(x) = a(x - b)^2 + c$$

where W is the full width at half maximum of a peak having the greatest peak width among a plurality of peaks seen in the measured curve, if the peaks of the measured curve are seen in the positive Y direction;
comparing individual points $(x_i - M, f_{Xi}(x_i - M))$ to $(x_i + M, f_{Xi}(x_i + M))$ of the quadratic curve $D_{Xi}$ having its vertex at $(x_i, c)$ $(x_i = b$ at the beginning of the measurement) with the corresponding points $(x_i - M, y_{Xi-M})$ to $(x_i + M, y_{Xi+M})$ on the measured curve to calculate

$$l_{Xi-M} = y_{Xi-M} - f_{Xi}(x_i - M)$$

$$\vdots$$

$$l_{Xi+M} = y_{Xi+M} - f_{Xi}(x_i + M)$$

and to specify the minimum value of $l_{Xi-M}$ to $l_{Xi+M}$ as $l_{(Xi)min}$;
moving the centered position $(x_i, 0)$ of the quadratic curve $D_{Xi}$ by a distance d parallel to the axis X within a range including point $(Xi, 0)$;
recalculating the minimum value of $l_{(Xi+d)min}$ at the centered position $(x_i+d, 0)$ of the quadratic curve $D_{Xi}$;
repeating the steps of moving and recalculating while moving the figure within the range of $(Xi-M, 0)$ to $(Xi+M, 0)$;
specifying the maximum value of

$$l(x_i - M)_{min} + f_{Xi-M}(x_i)$$

$$\vdots$$

$$l(x_i + M)_{min} + f_{Xi+M}(x_i)$$

obtained with respect to each of quadratic curves $D_{Xi-M}$ to $D_{Xi+M}$ having their vertices at $(x_i - M, c)$ to $(x_i + M, c)$, as $L_{(xi)}$;
setting a baseline point $(x_i, L_{(xi)})$ corresponding to a specific point $(x_i, y_i)$ on the measured curve;
setting baseline points corresponding to the individual points on the measured curve by moving the vertex in the X direction; and
connecting the baseline points to form a baseline.

5. A baseline setting method for a measured curve plotted on a reference axis X and a measured value axis Y extending in a direction orthogonal to the reference axis X, the measured curve having a single measured value $y_i$ identified with respect to each point $x_i$ on the reference axis X, the baseline setting method comprising the steps of:

specifying a quadratic curve $D_{Xi}$ centered on the reference axis X, expressed by

$$y = a(x - b)^2 + c$$

under the conditions

$$b - M \leq x \leq b + M$$

$$M \geq W$$

$$a > 0$$

$$f(x) = a(x - b)^2 + c$$

where W is the full width at half maximum of a peak having the greatest peak width among a plurality of peaks seen in the measured curve, if the peaks of the measured curve are seen in the negative Y direction;
comparing individual points $(x_i - M, f_{Xi}(x_i - M))$ to $(x_i + M, f_{Xi}(x_i + M))$ of the quadratic curve $D_{Xi}$ having its vertex at $(x_i, c)$ ($x_i = b$ at the beginning of the measurement) with the corresponding points $(x_i - M, y_{Xi-M})$ to $(x_i + M, y_{Xi+M})$ on the measured curve to calculate

$$l_{Xi-M} = f_{Xi}(x_i - M) - y_{Xi-M}$$
$$:$$
$$l_{Xi+M} = f_{Xi}(x_i + M) - y_{Xi+M}$$

and to specify the minimum value of $l_{Xi-M}$ to $l_{Xi+M}$ as $l_{(Xi)min}$;
moving the centered position $(x_i, 0)$ of the quadratic curve $D_{Xi}$ by a distance d parallel to the axis X within a range including point (Xi, 0);
recalculating the minimum value of $l_{(Xi+d)min}$ at

the centered position $(x_i+d, 0)$ of the quadratic curve $D_{Xi}$;
repeating the steps of moving and recalculating while moving the figure within the range of (Xi-M, 0) to (Xi+M, 0);
specifying the minimum value of

$$f_{Xi-M}(x_i) - l(x_i - M)_{min}$$
$$:$$
$$f_{Xi+M}(x_i) - l(x_i + M)_{min}$$

obtained with respect to each of quadratic curves $D_{Xi-M}$ to $D_{Xi+M}$ with their vertices at $(x_i - M, c)$ to $(x_i + M, c)$, as $L_{(xi)}$;
setting a baseline point $(x_i, L_{(Xi)})$ corresponding to a specific point $(x_i, y_i)$ on the measured curve;
setting baseline points corresponding to the individual points on the measured curve by moving the vertex in the X direction; and
connecting the baseline points to form a baseline.

**Patentansprüche**

1. Grundlinieneinstellungsverfahren für eine gemessene Kurve, die auf einer Bezugsachse X und einer Gemessener-Wert-Achse Y, die sich in einer Richtung orthogonal zu der Bezugsachse X erstreckt, geplottet ist, wobei die gemessene Kurve einen einzelnen gemessenen Wert $y_i$ aufweist, der mit Bezug auf einen Punkt $x_i$ auf der Bezugsachse X identifiziert ist, wobei das Grundlinieneinstellungsverfahren die folgenden Schritte aufweist:

Spezifizieren eines Halbkreises oder einer Halbellipse $C_{xi}$, zentriert auf der Bezugsachse X, und eines X-Radius R, ausgedrückt durch

$$x^2 + a^2 y^2 = r^2$$

$$y \geq 0$$

$$f_{Xi}(x) = \{(r^2 - x^2)^{1/2}\}/a$$

falls Spitzenwerte der gemessenen Kurve in der positiven Y-Richtung gesehen sind,
Vergleichen von individuellen Punkten $(x_i - r, f_{Xi}(x_i - r))$ bis $(x_i + r, f_{Xi}(x_i + r))$ des in $(x_i, 0)$ zentrierten Halbkreises oder der Halbellipse $C_{Xi}$ mit den korrespondierenden Punkten $(x_i - r, y_{Xi-r})$ bis $(x_i + r, y_{Xi+r})$ auf der gemessenen Kurve, um

zu berechnen

$$l_{Xi-r} = y_{Xi-r} - f_{Xi}(x_i - r)$$

$$\vdots$$

$$l_{Xi+r} = y_{Xi+r} - f_{Xi}(x_i + r)$$

und um den minimalen Wert von $l_{Xi-r}$ bis $l_{Xi+r}$ als $l_{(Xi)min}$ zu spezifizieren,

Bewegen der zentrierten Position $(x_i, 0)$ des Halbkreises oder der Halbellipse $C_{Xi}$ um eine Entfernung d parallel zu der Achse X innerhalb eines Bereichs einschließlich des Punkts $(Xi, 0)$, erneutes Berechnen des minimalen Werts von $l_{(Xi+d)min}$ an der zentrierten Position $(x_i+d, 0)$ des Halbkreises oder der Halbellipse $C_{Xi}$,

Wiederholen der Schritte zum Bewegen und erneuten Berechnen, während die Figur innerhalb des Bereichs von $(Xir, 0)$ bis $(Xi+r, 0)$ bewegt wird,

Spezifizieren des maximalen Werts von

$$l(x_i - r)_{min} + f_{Xi-r}(x_i)$$

$$\vdots$$

$$l(x_i + r)_{min} + f_{Xi+r}(x_i)$$

der mit Bezug auf jeden der an $(x_i - r, 0)$ bis $(x_i + r, 0)$ zentrierten Halbkreise oder Halbellipsen $C_{Xi-r}$ bis $C_{Xi+r}$ als $L_{(xi)}$ erhalten ist,

Einstellen eines Grundlinienpunkts $(x_i, L_{(xi)})$ korrespondierend zu einem spezifischen Punkt $(x_i, y_i)$ auf der gemessenen Kurve, und

Verbinden der Grundlinienpunkte korrespondierend zu den individuellen Punkten auf der gemessenen Kurve, um eine Grundlinie auszubilden.

2. Grundlinieneinstellungsverfahren für eine gemessene Kurve, die auf einer Bezugsachse X und einer Gemessener-Wert-Achse Y, die sich in einer Richtung orthogonal zu der Bezugsachse X erstreckt, geplottet ist, wobei die gemessene Kurve einen einzelnen gemessenen Wert $y_i$ aufweist, der mit Bezug auf jeden Punkt $x_i$ auf der Bezugsachse X identifiziert ist, wobei das Grundlinieneinstellungsverfahren die folgenden Schritte aufweist:

Spezifizieren eines Halbkreises oder einer Halbellipse $C_{Xi}$, zentriert auf der Bezugsachse X, und eines X-Radius, ausgedrückt durch

$$x^2 + a^2y^2 = r^2$$

$$y \leq 0$$

$$f_{Xi}(x) = \{(r^2 - x^2)^{1/2}\}/a$$

falls Spitzenwerte der gemessenen Kurve in der negativen Y-Richtung gesehen sind,

Vergleichen von individuellen Punkten $(x_i - r, f_{Xi}(x_i - r))$ bis $(x_i + r, f_{Xi}(x_i + r))$ des in $(x_i, 0)$ zentrierten Halbkreises oder der Halbellipse $C_{Xi}$ mit den korrespondierenden Punkten $(x_i - r, y_{Xi-r})$ bis $(x_i + r, y_{Xi+r})$ auf der gemessenen Kurve, um zu berechnen

$$l_{Xi-r} = f_{Xi}(x_i - r) - y_{Xi-r}$$

$$\vdots$$

$$l_{Xi+r} = f_{Xi}(x_i + r) - y_{Xi+r}$$

und um den minimalen Wert von $l_{Xi-r}$ bis $l_{Xi+r}$ als $l_{(Xi)min}$ zu spezifizieren,

Bewegen der zentrierten Position $(x_i, 0)$ des Halbkreises oder der Halbellipse $C_{Xi}$ um eine Entfernung d parallel zu der Achse X innerhalb eines Bereichs einschließlich des Punkts $(Xi, 0)$, erneutes Berechnen des minimalen Werts von $l_{(Xi+d)min}$ an der zentrierten Position $(x_i+d, 0)$ des Halbkreises oder der Halbellipse $C_{Xi}$,

Wiederholen der Schritte zum Bewegen und erneuten Berechnen, während die Figur im Bereich von $(Xi-r, 0)$ bis $(Xi+r, 0)$ bewegt wird,

Spezifizieren des minimalen Werts von

$$f_{Xi-r}(x_i) - l(x_i - r)_{min}$$

$$\vdots$$

$$f_{Xi+r}(x_i) - l(x_i + r)_{min}$$

der mit Bezug auf jeden von in $(x_i - r, 0)$ bis $(x_i + r, 0)$ zentrierten Halbkreisen oder Halbellipsen $C_{Xi-r}$ bis $C_{Xi+r}$ als $L_{(xi)}$ erhalten ist,

Einstellen eines Grundlinienpunkts $(x_i, L_{(xi)})$ korrespondierend zu einem spezifischen Punkt $(x_i, y_i)$ auf der gemessenen Kurve, und

Verbinden der Grundlinienpunkte korrespondierend zu den individuellen Punkten auf der gemessenen Kurve, um eine Grundlinie auszubilden.

3. Grundlinieneinstellungsverfahren nach einem der Ansprüche 1 und 2, wobei der X-Radius R des Halbkreises oder der Halbellipse $C_{xi}$ spezifiziert ist, um zumindest das Doppelte der vollen Breite bei halbem Maximum, W, eines Spitzenwerts zu sein, der die größte Spitzenwertbreite unter einer Vielzahl von Spitzenwerten in der gemessenen Kurve gesehen aufweist.

4. Grundlinieneinstellungsverfahren für eine gemessene Kurve, die auf einer Bezugsachse X und einer Gemessener-Wert-Achse Y, die sich in einer Richtung orthogonal zu der Bezugsachse X erstreckt, geplottet ist, wobei die gemessene Kurve einen einzelnen gemessenen Wert $y_i$ aufweist, der mit Bezug auf jeden Punkt $x_i$ auf der Bezugsachse X identifiziert ist, wobei das Grundlinieneinstellungsverfahren die folgenden Schritte aufweist:

Spezifizieren einer Kurve zweiter Ordnung $D_{Xi}$, die auf der Bezugsachse X zentriert ist, ausgedrückt durch

$$y = a(x - b)^2 + c$$

unter den Bedingungen:

$$b - M \leq x \leq b + M$$

$$M \geq W$$

$$a < 0$$

$$f(x) = a(x - b)^2 + c$$

wobei W die volle Breite bei halbem Maximum eines Spitzenwerts ist, der die größte Spitzenwertbreite unter einer Vielzahl von Spitzenwerten in der gemessenen Kurve gesehen aufweist, falls die Spitzenwerte der gemessenen Kurve in der positiven Y-Richtung gesehen sind,
Vergleichen von individuellen Punkten $(x_i - M, f_{Xi}(x_i - M))$ bis $(x_i + M, f_{Xi}(x_i + M))$ der Kurve zweiter Ordnung $D_{Xi}$, die ihren Scheitelpunkt bei $(x_i, c)$ ($x_i = b$ zu Beginn der Messung) aufweist, mit den korrespondierenden Punkten $(x_i - M, y_{Xi-M})$ bis $(x_i + M, y_{Xi+M})$ auf der gemessenen Kurve, um zu berechnen

$$l_{Xi-M} = y_{Xi-M} - f_{Xi}(x_i - M)$$
$$\vdots$$
$$l_{Xi+M} = y_{Xi+M} - f_{Xi}(x_i + M)$$

und um den minimalen Wert von $l_{Xi-M}$ bis $l_{Xi+M}$ als $l_{(Xi)min}$ zu spezifizieren,

Bewegen der zentrierten Position $(x_i, 0)$ der Kurve zweiter Ordnung $D_{Xi}$ um eine Entfernung d parallel zu der Achse X innerhalb eines Bereichs einschließlich des Punkts $(Xi, 0)$,
erneutes Berechnen des minimalen Werts von $l_{(Xi+d)min}$ an der zentrierten Position $(x_i+d, 0)$ der Kurve zweiter Ordnung $D_{Xi}$,
Wiederholen der Schritte zum Bewegen und erneuten Berechnen, während die Figur innerhalb des Bereichs von $(Xi-M, 0)$ bis $(Xi+M, 0)$ bewegt wird,
Spezifizieren des maximalen Werts von

$$l(x_i - M)_{min} + f_{Xi-M}(x_i)$$
$$\vdots$$
$$l(x_i + M)_{min} + f_{Xi+M}(x_i)$$

der mit Bezug auf jede der Kurven zweiter Ordnung $D_{Xi-M}$ bis $D_{Xi+M}$, deren Scheitelpunkte bei $(x_i - M, c)$ bis $(x_i + M, c)$ liegen, als $L_{(xi)}$ erhalten ist,
Einstellen eines Grundlinienpunkts $(x_i, L_{(xi)})$ korrespondierend zu einem spezifischen Punkt $(x_i, y_i)$ auf der gemessenen Kurve,
Einstellen von Grundlinienpunkten korrespondierend zu den individuellen Punkten auf der gemessenen Kurve, indem der Scheitelpunkt in der X-Richtung bewegt wird, und
Verbinden der Grundlinienpunkte, um eine Grundlinie auszubilden.

5. Grundlinieneinstellungsverfahren für eine gemessene Kurve, die auf einer Bezugsachse X und einer Gemessener-Wert-Achse Y, die sich in einer Richtung orthogonal zu der Bezugsachse X erstreckt, geplottet ist, wobei die gemessene Kurve einen einzelnen gemessenen Wert $y_i$ aufweist, der mit Bezug auf jeden Punkt $x_i$ auf der Bezugsachse X identifiziert ist, wobei das Grundlinieneinstellungsverfahren die folgenden Schritte aufweist:

Spezifizieren einer Kurve zweiter Ordnung $D_{Xi}$, die auf der Bezugsachse X zentriert ist, ausgedrückt durch

$$y = a(x - b)^2 + c$$

unter den Bedingungen

$$b - M \leq x \leq b + M$$

$$M \geq W$$

$$a > 0$$

$$f(x) = a(x - b)^2 + c$$

wobei W die volle Breite bei halbem Maximum eines Spitzenwerts ist, der die größte Spitzenwertbreite unter einer Vielzahl von Spitzenwerten gesehen in der gemessenen Kurve aufweist, falls die Spitzenwerte der gemessenen Kurve in der negativen Y-Richtung gesehen sind,
Vergleichen von individuellen Punkten $(x_i - M, f_{Xi}(x_i - M))$ bis $(x_i + M, f_{Xi}(x_i + M))$ der Kurve zweiter Ordnung $D_{Xi}$, deren Scheitelpunkt bei $(x_i, c)$ ($x_i = b$ zu Beginn der Messung) liegt, mit den korrespondierenden Punkten $(x_i - M, y_{Xi-M})$ bis $(x_i + M, y_{Xi+M})$ auf der gemessenen Kurve, um zu berechnen:

$$l_{Xi-M} = f_{Xi}(x_i - M) - y_{Xi-M}$$
$$:$$
$$l_{Xi+M} = f_{Xi}(x_i + M) - y_{Xi+M}$$

und um den minimalen Wert von $l_{Xi-M}$ bis $l_{Xi+M}$ als $l_{(Xi)min}$ zu spezifizieren,
Bewegen der zentrierten Position $(x_i, 0)$ der Kurve zweiter Ordnung $D_{Xi}$ um eine Entfernung d parallel zu der Achse X innerhalb eines Bereichs einschließlich des Punkts $(Xi, 0)$,
erneutes Berechnen des minimalen Werts von $l_{(Xi+d)min}$ an der zentrierten Position $(x_i+d, 0)$ der Kurve zweiter Ordnung $D_{Xi}$,
Wiederholen der Schritte zum Bewegen und erneuten Berechnen, während die Figur innerhalb des Bereichs von $(Xi-M, 0)$ bis $(Xi+M, 0)$ bewegt wird,
Spezifizieren des minimalen Werts von

$$f_{Xi-M}(x_i) - l(x_i - M)_{min}$$
$$:$$
$$f_{Xi+M}(x_i) - l(x_i + M)_{min}$$

der mit Bezug auf jede der Kurven zweiter Ordnung $D_{Xi-M}$ bis $D_{Xi+M}$, deren Scheitelpunkte bei $(x_i - M, c)$ bis $(x_i + M, c)$ liegen, als $L_{(xi)}$ erhalten ist,
Einstellen eines Grundlinienpunkts $(x_i, L_{(xi)})$ korrespondierend zu einem spezifischen Punkt $(x_i, y_i)$ auf der gemessenen Kurve,
Einstellen von Grundlinienpunkten korrespondierend zu den individuellen Punkten auf der gemessenen Kurve, indem der Scheitelpunkt in der X-Richtung bewegt wird, und

Verbinden der Grundlinienpunkte, um eine Grundlinie auszubilden.

**Revendications**

1.  Procédé de définition de ligne de base pour une courbe mesurée tracée sur un axe de référence X et un axe de valeur mesurée Y s'étendant dans une direction orthogonale à l'axe de référence X, la courbe mesurée ayant une seule valeur mesurée $y_i$ identifiée par rapport à un point $x_i$ sur l'axe de référence X, le procédé de définition de ligne de base comprenant les étapes de :

    spécification d'un demi-cercle ou d'une demi-ellipse $C_{Xi}$ centré(e) sur l'axe de référence X et un rayon R selon X, exprimé par

    $$x^2 + a^2y^2 = r^2$$

    $$y \geq 0$$

    $$f_{xi}(x) = \{(r^2 - x^2)^{1/2}\}/a$$

    si des pics de la courbe mesurée sont vus dans la direction Y positive ;
    comparaison de points individuels $(x_i-r, f_{xi}(x_i-r))$ à $(x_i+r, f_{xi}(x_i+r))$ du demi-cercle ou de la demi-ellipse $C_{xi}$ centré(e) à $(x_i, 0)$ avec les points correspondants $(x_i-r, y_{xi-r})$ à $(x_i+r, y_{xi+r})$ sur la courbe mesurée pour calculer

    $$l_{xi-r} = y_{xi-r} - f_{xi}(x_i - r)$$
    $$:$$
    $$l_{xi+r} = y_{xi+r} - f_{xi}(x_i+r)$$

    et pour spécifier la valeur minimale de $l_{xi-r}$ à $l_{xi+r}$ en tant que $l_{(xi)min}$ ;
    déplacement de la position centrée $(x_i, 0)$ du demi-cercle ou de la demi-ellipse $C_{xi}$ d'une distance d parallèle à l'axe X dans une plage incluant le point $(Xi, 0)$ ;
    recalcul de la valeur minimale de $l_{(xi+d)min}$ à la position centrée $(x_i+d, 0)$ du demi-cercle ou de la demi-ellipse $C_{xi}$ ;
    répétition des étapes de déplacement et de recalcul tout en déplaçant la figure dans la plage de $(Xi-r, 0)$ à $(Xi+r, 0)$ ;
    spécification de la valeur maximale de

$$l(x_i-r)_{min} + f_{xi-r}(xi)$$

$$\vdots$$

$$l(x_i+r)_{min} + f_{xi+r}(xi)$$

obtenue par rapport à chacun des demi-cercles ou des demi-ellipses $C_{xi-r}$ à $C_{xi+r}$ centré(e)s à $(x_i\text{-}r, 0)$ à $(x_i\text{+}r, 0)$, en tant que $L_{(xi)}$ ;
définition d'un point de ligne de base $(x_i, L_{(xi)})$ correspondant à un point spécifique $(x_i, y_i)$ sur la courbe mesurée ; et
liaison des points de ligne de base correspondant aux points individuels sur la courbe mesurée, pour former une ligne de base.

2. Procédé de définition de ligne de base pour une courbe mesurée tracée sur un axe de référence X et un axe de valeur mesurée Y s'étendant dans une direction orthogonale à l'axe de référence X, la courbe mesurée ayant une seule valeur mesurée $y_i$ identifiée par rapport à chaque point $x_i$ sur l'axe de référence X, le procédé de définition de ligne de base comprenant les étapes de :

spécification d'un demi-cercle ou d'une demi-ellipse $C_{xi}$ centré(e) sur l'axe de référence X et un rayon de X, exprimé par

$$x^2 + a^2y^2 = r^2$$

$$y \leq 0$$

$$f_{xi}(x) = \{(r^2\text{-}x^2)^{1/2}\}/a$$

si des pics de la courbe mesurée sont vus dans la direction Y négative ;
comparaison de points individuels $(x_i\text{-}r, f_{xi}(x_i\text{-}r))$ à $(x_i\text{+}r, f_{xi}(x_i\text{+}r))$ du demi-cercle ou de la demi-ellipse $C_{xi}$ centré(e) à $(x_i, 0)$ avec les points correspondants $(x_i\text{-}r, y_{xi\text{-}r})$ à $(x_i\text{+}r, Y_{xi\text{+}r})$ sur la courbe mesurée pour calculer

$$l_{xi-r} = f_{xi}(x_i\text{-}r) - y_{xi-r}$$

$$\vdots$$

$$l_{xi+r} = f_{xi}(x_i\text{+}r) - y_{xi+r}$$

et pour spécifier la valeur minimale de $l_{xi-r}$ à $l_{xi+r}$ en tant que $l_{(xi)min}$ ;
déplacement de la position centrée $(x_i, 0)$ du demi-cercle ou de la demi-ellipse $C_{xi}$ d'une distance d parallèle à l'axe X dans une plage incluant le point $(Xi, 0)$ ;
recalcul de la valeur minimale de $l_{(xi+d)min}$ à la position centrée $(x_i\text{+}d, 0)$ du demi-cercle ou de la demi-ellipse $C_{xi}$ ;
répétition des étapes de déplacement et de recalcul tout en déplaçant la figure dans la plage de $(Xi\text{-}r, 0)$ à $(Xi\text{+}r, 0)$ ;
spécification de la valeur minimale de

$$f_{xi-r}(x_i) - l(x_i-r)_{min}$$

$$\vdots$$

$$f_{xi+r}(x_i) - l(x_i+r)_{min}$$

obtenue par rapport à chacun des demi-cercles ou demi-ellipses $C_{xi-r}$ à $C_{xi+r}$ centré(e)s à $(x_i\text{-}r, 0)$ à $(x_i\text{+}r, 0)$, en tant que $L_{(xi)}$ ;
définition d'un point de ligne de base $(x_i, L_{(xi)})$ correspondant à un point spécifique $(x_i, y_i)$ sur la courbe mesurée ; et
liaison des points de ligne de base correspondant aux points individuels sur la courbe mesurée, pour former une ligne de base.

3. Procédé de définition de ligne de base selon l'une des revendications 1 et 2, dans lequel le rayon R selon X du demi-cercle ou de la demi-ellipse $C_{xi}$ est spécifié pour être au moins le double de la largeur totale à mi-hauteur, W, d'un pic ayant la plus grande largeur de pic parmi une pluralité de pics vus dans la courbe mesurée.

4. Procédé de définition de ligne de base pour une courbe mesurée tracée sur un axe de référence X et un axe de valeur mesurée Y s'étendant dans une direction orthogonale à l'axe de référence X, la courbe mesurée ayant une seule valeur mesurée $y_i$ identifiée par rapport à chaque point $x_i$ sur l'axe de référence X, le procédé de définition de ligne de base comprenant les étapes de :

spécification d'une courbe quadratique $D_{xi}$ centrée sur l'axe de référence X, exprimé par

$$y = a(x\text{-}b)^2 + c$$

dans les conditions :

$$b - M \leq x \leq b + M$$

$$M \geq W$$

$$a < 0$$

$$f(x) = a(x-b)^2 + c$$

où W est la largeur totale à mi-hauteur d'un pic ayant la plus grande largeur de pic parmi une pluralité de pics vus dans la courbe mesurée, si les pics de la courbe mesurée sont vus dans la direction Y positive ;

comparaison de points individuels $(x_i-M, f_{xi}(x_i-M))$ à $(x_i+M, f_{xi}(x_i+M))$ de la courbe quadratique $D_{Xi}$ ayant son sommet à $(x_i, c)$ $(x_i = b$ au début de la mesure) avec les points correspondants $(x_i-M, y_{xi-M})$ à $(x_i+M, y_{xi+M})$ sur la courbe mesurée pour calculer

$$l_{xi-M} = y_{xi-M} - f_{xi}(x_i-M)$$
$$\vdots$$
$$l_{xi+M} = y_{xi+M} - f_{xi}(x_i+M)$$

et pour spécifier la valeur minimale $l_{xi-M}$ à $l_{xi+M}$ en tant que $l_{(xi)min}$ ;

déplacement de la position centrée $(x_i, 0)$ de la courbe quadratique $D_{Xi}$ d'une distance d parallèle à l'axe X dans une plage incluant le point $(Xi, 0)$ ;

recalcul de la valeur minimale de $l_{(xi+d)min}$ à la position centrée $(x_i+d, 0)$ de la courbe quadratique $D_{Xi}$ ;

répétition des étapes de déplacement et de recalcul tout en déplaçant la figure dans la plage de $(Xi-M, 0)$ à $(Xi+M, 0)$ ;

spécification de la valeur maximale de

$$l(x_i-M)_{min} + f_{xi-M}(x_i)$$
$$\vdots$$
$$l(x_i+M)_{min} + f_{xi+M}(X_i)$$

obtenue par rapport à chacune des courbes quadratiques $D_{Xi-M}$ à $D_{xi+M}$ ayant leurs sommets à $(x_i-M, c)$ à $(x_i+M, c)$, en tant que $L_{(xi)}$ ;

définition d'un point de ligne de base $(x_i, L_{(xi)})$ correspondant à un point spécifique $(x_i, y_i)$ sur la courbe mesurée ;

définition de points de ligne de base correspondant aux points individuels sur la courbe mesurée en déplaçant le sommet dans la direction X ; et

liaison des points de ligne de base pour former une ligne de base.

**5.** Procédé de définition de ligne de base pour une courbe mesurée tracée sur un axe de référence X et un axe de valeur mesurée Y s'étendant dans une direction orthogonale à l'axe de référence X, la courbe mesurée ayant une seule valeur mesurée $y_i$ identifiée par rapport à chaque point $x_i$ sur l'axe de référence X, le procédé de définition de ligne de base comprenant les étapes de :

spécification d'une courbe quadratique $D_{Xi}$ centrée sur l'axe de référence X, exprimée par

$$y = a(x-b)^2 + c$$

dans les conditions

$$b - M \leq x \leq b+M$$

$$M \geq W$$

$$a > 0$$

$$f(x) = a(x-b)^2 + c$$

où W est la largeur totale à mi-hauteur d'un pic ayant la plus grande largeur de pic parmi une pluralité de pics vus dans la courbe mesurée, si les pics de la courbe mesurée sont vus dans la direction Y négative ;

comparaison de points individuels $(x_i-M, f_{xi}(x_i-M))$ à $(x_i+M, f_{xi}(x_i+M))$ de la courbe quadratique $D_{Xi}$ ayant son sommet à $(x_i, c)$ $(x_i = b$ au début de la mesure) avec les points correspondants $(x_i-M, Y_{xi-M})$ à $(x_i+M, y_{xi+M})$ sur la courbe mesurée pour calculer

$$l_{Xi-M} = f_{xi}(x_i-M) - y_{xi-M}$$
$$\vdots$$
$$l_{Xi+M} = f_{Xi}(x_i+M) - y_{xi+M}$$

et pour spécifier la valeur minimale de $l_{xi-M}$ à $l_{xi+M}$ en tant que $l_{(xi)min}$ ;

déplacement de la position centrée $(x_i, 0)$ de la courbe quadratique $D_{Xi}$ d'une distance d parallèle à l'axe X dans une plage incluant le point $(Xi, 0)$ ;

recalcul de la valeur minimale de $l_{(Xi+d)min}$ à la

position centrée ($x_i$+d, 0) de la courbe quadratique $D_{Xi}$ ;
répétition des étapes de déplacement et de recalcul tout en déplaçant la figure dans la plage de (Xi-M, 0) à (Xi+M, 0) ;
spécification de la valeur minimale de

$$f_{Xi-M}(x_i) - l(x_i-M)_{min}$$

$$:$$

$$f_{Xi+M}(x_i) - l(x_i+M)_{min}$$

obtenue par rapport à chacune des courbes quadratiques $D_{Xi-M}$ à $D_{Xi+M}$ avec leurs sommets à ($x_i$-M, c) à ($x_i$+M, c) , en tant que $L_{(xi)}$ ;
définition d'un point de ligne de base ($x_i$, $L_{(xi)}$) correspondant à un point spécifique ($x_i$, $y_i$) sur la courbe mesurée ;
définition de points de ligne de base correspondant aux points individuels sur la courbe mesurée en déplaçant le sommet dans la direction X ; et
liaison des points de ligne de base pour former une ligne de base.

FIG.1

FIG.2

FIG.3

$(X_i, P_1)$

$(P_1$ is maximum value of $Y_{min} + f(X_i))$

$Y_{mint} + f_{xi}(X_i)$

$Y_{minn} + f_{xi+r}(X_i)$

$Y_{mint} + f_{xi-r}(X_i)$

$f_{xi-r}$

$f_{xi}$

$f_{xi+r}$

$-r$

$X_i$

$+r$

cm$^{-1}$

FIG.4

measured spectra

$X_i$

$X_{i+1}$

$X_{i+2}$

$X_{i+3}$

$X_{i+4}$

cm$^{-1}$

FIG.5

FIG.6

$\bullet$ —— $f_{Xi-r}(Xi)-Y_{min1}$

$\bullet$ —— $f_{Xi-1/2r}(Xi)-Y_{mini}$
$\bullet$ —— $f_{Xi+r}(Xi)-Y_{minn}$ $(1 < i < t < j < n)$

$\bullet$ —— $f_{Xi}(Xi)-Y_{mint}$

$\bullet$ —— $f_{Xi+1/2r}(Xi)-Y_{minj}$

-r    $X_i$    +r

$f_{Xi-r}$    $f_{Xi-1/2r}$    $f_{Xi}$    $f_{Xi+1/2r}$    $f_{Xi+r}$

FIG.7

FIG.8

(a)

(b)

FIG.9

(a)

(b)

FIG.10

(a)

(b)

FIG.11

(a)

Int.

Raman Shift [cm-1]

(b)

Int.

Raman Shift [cm-1]

FIG.12

(a)

(b)

FIG.13

FIG.14

$$Y_{min1}+f_{xi}(xi)$$
(maximum value P1)

$Y_{min1}$

$X_i$

2M

cm⁻¹

FIG.15

FIG.16

FIG.17

FIG.18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI0560614 A